# DEMANDE DE BREVET EUROPEEN

(11) **EP 0 982 333 A1**
(43) Date de publication de la demande: **01.03.2000**
(21) Numéro de dépôt: 99402087.3
(22) Date de dépôt: 19.08.1999
(51) Int. Cl.: C08G 18/20, C08G 18/69

(54) **Formulations polyuréthane à base de polybutadiène hydroxylé catalysées par un dérivé de l'imidazole**

(30) Priorité: 27.08.1998 FR 9810755
(71) Demandeur: ELF ATOCHEM S.A., 92800 Puteaux, Hauts-de-Seine (FR)
(72) Inventeur: Auvray, Josée, 76000 Rouen (FR); Flat, Jean-Jaques, 27470 Serquigny (FR); Pradel, Jean-Laurent, 27300 Bernay (FR); Renouard, Philippe, 27800 Brionne (FR)

(57) **Abrégé**

L'invention se rapporte aux formulations polyuréthane à base de polybutadiène hydroxylé catalysées par un dérivé de l'imidazole N-substitué.

Ce type de catalyse remplace avantageusement les catalyseurs classiques à base de sel de mercure. En effet, il ne pose pas de problème écologique et permet une montée de viscosité particulière autorisant un temps de travail allongé et une prise rapide.

## Description

L'invention se rapporte au domaine des formulations polyuréthane et en particulier aux formulations polyuréthane à base de polybutadiènes hydroxylés catalysées de manière à avoir un temps de travail allongé et une prise rapide.

De manière générale la catalyse choisie pour ce genre de formulation permet une augmentation lente de la viscosité de la formulation pendant un temps suffisamment long, suivie d'une augmentation rapide. Ceci est traduit par l'homme du métier respectivement par temps de travail allongé et prise rapide.

Le matériau polyuréthane est obtenu par réaction entre une partie A, contenant au moins un composé ayant au moins deux fonctions alcool désigné ci-après par polyol, et une partie B, contenant au moins un composé ayant au moins deux fonctions isocyanate désigné ci-après par polyisocyanate.

Les formulations conduisant au matériau polyuréthane sont donc constituées de deux parties A et B, qui, une fois mélangées intimement, réticulent selon un profil de montée en viscosité particulier. De manière générale, le système catalytique est contenu dans la partie A.

De manière générale, chaque partie peut contenir différents éléments tels que charges minérales, plastifiants, stabilisants, etc...

On constate que la catalyse aux sels de mercure généralement utilisée remplit parfaitement le cahier des charges. Par exemple l'homme du métier connait les sels organo mercuriques pour leurs capacités à donner un temps de travail allongé et une prise rapide.

Cependant les sels de mercure posent un problème écologique évident et l'usage de ces composés est de plus en plus déconseillé.

Le problème donc que se propose de résoudre la demanderesse est de substituer les catalyseurs à base de sel de mercure par un autre composé permettant un temps de travail allongé et une prise rapide et ne posant pas de problème écologique ou écotoxicologique.

La demanderesse a trouvé qu'une solution ingénieuse à ce problème passe par la substitution des catalyseurs à base de sel de mercure par un dérivé de l'imidazole au moins N-substitué.

En effet, les dérivés de l'imidazole au moins N-substitués ne contiennent pas de métaux lourds écologiquement néfastes et permettent, en tant que catalyseurs des formulations polyuréthanes, un temps de travail allongé et une prise rapide. En outre, ils sont stables et conservent leur activité catalytique même pendant un stockage prolongé.

L'utilisation dudit système catalytique se fait dans une formulation polyuréthane classique contenant éventuellement une charge, un plastifiant et/ou un agent d'adhésion.

Un des objets de l'invention est une formulation conduisant à un matériau polyuréthane, constituée de deux parties A et B, qui, une fois mélangées intimement, réticulent selon un profil de montée en viscosité particulier caractérisant l'invention comme décrit plus loin.

De manière générale, le système catalytique est contenu dans la partie A. Mais selon une autre variante il peut être contenu dans la partie B.

Selon une forme de l'invention, la partie A contenant le ou les polyol(s) est constituée de :
5 à 99,99 % en poids et de préférence de 10 à 50 % d'au moins un polyol,
0 à 50 % en poids et de préférence de 10 à 50 % d'au moins un plastifiant,
0 à 90 % en poids et de préférence de 40 à 90 % d'au moins une charge minérale,
0 à 20 % en poids et de préférence 0 à 10 % d'au moins un agent deshydratant type tamis moléculaire,
0 à 5 % en poids et de préférence de 0 à 1 % d'au moins une résine tackifiante,
0 à 5 % en poids et de préférence de 0 à 1 % d'au moins un stabilisant UV et/ou un antioxydant,
0,01 à 1 % en poids et de préférence de 0,01 à 0,1 % du système catalytique selon l'invention.

Les polyols utilisables sont généralement des polymères de masse moléculaire moyenne en nombre n allant de 500 à 15000 et de préférence allant de 1000 à 5000.

Selon l'invention, les polyols sont de préférence des polydiènes polyols ayant des masses moyennes en nombre inférieures à 7000 et de préférence comprise entre 1000 et 5000.

Ils présentent des fonctionnalités moyennes allant de 1 à 5 et de préférence comprise entre 1,8 et 3.

Selon la présente invention, le diène conjugué du polydiène-polyol est choisi dans le groupe comprenant le butadiène, l'isoprène, le chloroprène, le 1,3-pentadiène ou le cyclopentadiène.

Conviennent également les copolymères de diènes conjugués et monomères vinyliques et acryliques tels que le styrène, l'acrylonitrile.

A titre d'illustration de polydiènes-polyols, on citera les polybutadiènes hydroxylés commercialisés par la Société ELF ATOCHEM S.A. sous les marques POLY BD®R-45HT et POLY BD®R-20LM.

On peut utiliser ces polyols en mélange avec des polyethers-polyols ou des polyesters polyols.

On ne sortirait pas du cadre de l'invention si on utilisait des oligomères époxydés hydroxytéléchéliques de diènes sur la chaîne ou bien encore des oligomères hydrogénés hydroxytéléchéliques de diènes conjugués.

Selon l'invention, un polyol de masse inférieure à 500, appelé allongeur de chaîne, peut être mélangé au polyol.

A titre d'illustration de tels composés, on citera l'éthylène glycol, le propylène glycol, le diéthylène glycol, le dipropylène glycol, le 1,4-butanediol, le 1,6- hexanediol, le 2-éthyl-1,3-hexanediol, le 2-méthyl-2,4-pentanediol, le N,N-bis (hydroxy-2-propyl)aniline, le 2-méthyl-1,5-pentanediol.

On ne sortirait pas du cadre de l'invention en ajoutant au polyol une polyamine, comme allongeur de chaîne, telle que l'isophorone diamine, l'hexaméthylène diamine ou des oligomères de l'éthylène glycol modifiés amine tels que les Jeffamine® de la Société HUNTSMAN.

Les plastifiants utilisables selon la présente invention sont les plastifiants connus de l'homme du métier, à savoir les esters d'acides carboxyliques divalents ou polyvalents, les huiles naphténiques et leurs mélanges. A titre d'exemple, on utilise de préférence les dialkyle phtalates tels que le phtalate de di(2-éthyl-hexyle), le phtalate de di(undécyle), les alkyl phtalate de benzyle, les composés cycloaliphatiques issus de la distillation des coupes naphténiques.

Les charges minérales dont la fonction est de régler la viscosité et le profil rhéologique du mélange peuvent être choisies parmi les carbonates traités ou non, les silices traitées ou non, les oxydes de titane, d'aluminium ou d'autres métaux traités ou non et les noirs de carbones.

Les résines tackifiantes liquides, utilisées pour améliorer l'adhésion, peuvent être des esters de collophane, des résines terniques hydrogénées ou non, ou leur mélange.

Les stabilisants UV et antioxydants sont généralement ceux utilisés dans l'industrie des polyuréthanes.

L'agent deshydratant, dont le rôle est de limiter, voire d'éliminer l'effet néfaste de l'humidité, est choisi par exemple dans la gamme des tamis moléculaires.

Le système catalytique sera choisi dans la famille chimique des imidazoles substituées en mélange ou non avec des amines tertiaires pour permettre une cinétique de réticulation finale adéquate, telles que la triéthylène diamine.

Les imidazoles de l'invention répondent à la formule générale suivante : 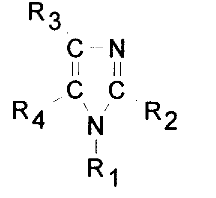 dans laquelle,
R₁ est un groupe alkyle en C₁ - C₄ tel que méthyle, éthyle
R₂, R₃ et R₄ identiques ou non, sont choisis dans le groupe constitué par :
l'hydrogène,
les radicaux alkyles aliphatiques linéaires ou ramifiés ou cycliques en C₁ - C₆.

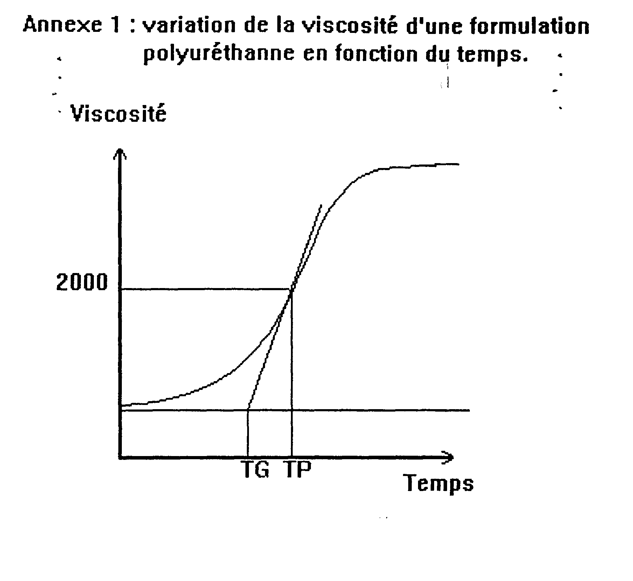

Selon l'invention le catalyseur est choisi de manière à avoir un temps de travail allongé et une prise rapide. Ceci se mesure par un appareil de type TROMBOMAT. En particulier, la pente de la courbe au point d'inflexion doit être au moins égale à 50 Pa.s/min (voir la figure donnée en annexe 1).

La partie B contenant le polyisocyanate est constituée de
- 5 à 100 % en poids, et de préférence 20 à 40 % d'au moins un polyisocyanate,
- 0 à 80 % en poids, et de préférence 20 à 60 % d'au moins un plastifiant,
- 0 à 80 % en poids, et de préférence 5 à 40 % d'au moins une charge minérale jouant le rôle de pigment,
- 0 à 20 % en poids, et de préférence 0 à 10 % d'au moins un agent déshydratant type tamis moléculaire,
- 0 à 50 % en poids, et de préférence 10 à 30 % d'au moins un promoteur d'adhésion.

Les polyisocyanates utilisés selon l'invention sont les polyisocyanates aromatiques, aliphatiques ou cyclo-aliphatiques portant au moins deux fonctions isocyanates.

A titre d'illustration, les polyisocyanates aromatiques peuvent être le 4,4'-diphényl-méthane diisocyanate (MDI), les MDI modifiés liquides, les MDI polymériques, le 2,4- et le 2,6- toluène diisocyanate (TDI) ainsi que leur mélange, le xylylène diisocyanate (XDI), le triphényl méthane triisocyanate, le tétraméthyl xylylène diisocyanate (TMXDI), le paraphénylène diisocyanate (PPDI), le naphtalène diisocyanate (NDI).

Parmi les polyisocyanates aromatiques, l'invention concerne de préférence le MDI et ses dérivés polymériques.

Parmi les polyisocyanates aliphatiques et cycloaliphatiques, on citera l'isophorone diisocyanate (IPDI) et ses dérivés, le 4,4'-dicyclo-hexyl méthane diisocyanate, le cyclohexyl diisocyanate, l'hexaméthylène diisocyanate (HMDI) et ses dérivés, le triméthyl hexaméthylène diisocyanate.

On ne sortirait pas du cadre de l'invention si on utilisait des prépolymères d'isocyanates obtenus par réaction d'un polyisocyanate mentionné précédemment avec un polyol tel que notamment polyéthers-polyols, polyesters-polyols, polydiènes polyols et polyamines.

Les agents d'adhésion, connus par l'homme du métier, sont généralement des silanes réactifs ou non tels que des époxy silanes ou aminosilanes.

Les additifs ajoutés par l'homme du métier ont pour but de faciliter la mise en oeuvre et/ou de conférer au matériau final certaines propriétés. Ils peuvent être contenus dans la partie A ou la partie B ou bien répartis sur les deux parties.

Pour obtenir le matériau final on mélange les parties A et B intimement dans les proportions telles que le rapport entre le nombre de fonctions isocyanate apportées par la partie B et le nombre de fonctions alcool apportées par la partie A soit compris entre 0,8 et 1,2 et de préférence entre 1 et 1,1.

On utilisera pour le mélange et l'application du produit une machine de coulée permettant le dépôt convenable de la formulation en fonction de l'application visée.

L'invention concerne aussi une méthode d'assemblage de divers substrats tels que, verre, métal, cuir matériaux, plastiques consistant en l'application de la composition selon l'invention sur au moins une surface des substrats à joindre et le rapprochement desdits substrats de façon à garder piégiée entre eux ladite composition.

Les applications particulièrement adaptées à l'invention sont les applications d'adhésifs et mastics comme par exemple les adhésifs automobile, les mastics pour joints de double vitrage, les membranes d'étanchéité ou les résines d'encapsulation.

Dans le cadre de l'invention on définit trois paramètres lors du suivi de la montée en viscosité du mélange partie A / partie B, correctement dosé, sur un appareil TROMBOMAT : (voir la courbe donnée en annexe 1)
→ le temps de gel (TG) donné par l'intersection de la pente au point d'inflexion avec la droite d'isoviscosité initiale,
→ le temps de prise (TP) donné par le temps nécessaire pour atteindre le point d'inflexion,
→ la pente de la courbe de montée en viscosité au point d'inflexion.

Pour entrer dans le cadre de l'invention, un système catalytique doit permettre à la formulation de remplir les deux conditions suivantes :
- avoir un écart entre temps de gel et temps de prise minimum et inférieur au temps de gel,
- avoir une pente au point d'inflexion élevée et en particulier supérieure à 50 Pa.s/min.

Dans le cadre de l'invention, il est montré que la stabilité au stockage du nouveau catalyseur est supérieure à celle du catalyseur à base de mercure. En effet, après un stockage prolongé du catalyseur pur, son activité catalytique n'est pas altérée. Et après un stockage de la partie A formulée, l'activité catalytique des imidazoles substituées est renforcée (et renforce la position du produit dans le cadre de l'invention), alors que le catalyseur à base de mercure perd de son actitivé catalytique.

Les exemples suivants illustrent l'invention sans en limiter la portée.

### Exemples

### I. Préparation d'une partie A et d'une partie B

### Les parties A et B sont préparées et stockées à température ambiante.

### I.1. Préparation de A

La partie A est préparée dans une boîte en fer blanc de volume 1 litre (Hauteur : 125 mm, Diamètre : 110 mm).

Le mélangeur disperseur est un Grenier-Charvet Labotex L600 muni d'un fouet à 3 pales (Diamètre : 100 mm).

La partie A contient le polyol, du plastifiant, différents additifs et est fortement chargée en carbonate de calcium. C'est une pâte visqueuse de couleur blanchâtre.

Différentes parties A ont été préparées. Elles se distinguent les unes des autres seulement par la nature et le taux de catalyseur. Les conditions de préparation sont les mêmes.

Les tableaux 1 et 2 résument respectivement les compositions des parties A préparées et les conditions de préparation.

**Tableau 1**

| Produit | Nom commercial | Fournisseur | Exemples | | |
|---|---|---|---|---|---|
| | | | 1 | 2 | 3 |
| | | | % | % | % |
| Polybutadiène hydroxylé | Poly Bd R45HT | Elf Atochem | 18.45 | 18.45 | 18.45 |
| Résine tackifiante | Novares LA 1200 | VFT | 0.78 | 0.78 | 0.78 |
| Plastifiant | Santicizer 261 | Monsanto | 15.25 | 15.25 | 15.25 |
| Dioxide de titane | R101 | Dupont | 0.97 | 0.97 | 0.97 |
| Anti UV | Chimassorb 81 | Ciba | 0.19 | 0.19 | 0.19 |
| Antioxydant | Irganox 1076 | Ciba | 0.39 | 0.39 | 0.39 |
| Tamis moléculaire | Baylith T Poudre | Bayer | 0.97 | 0.97 | 0.97 |
| Catalyseur | | | 0.06 | 0.07 | 0.05 |
| Carbonate de calcium broyé | Omya BLP3 | Omya | 20.59 | 20.59 | 20.59 |
| Carbonate de calcium précipité | Calofort SM | Rhône-Poulenc | 41.37 | 41.37 | 41.37 |
| Silice pyrogénée | Aerosil R202 | Degussa | 0.97 | 0.97 | 0.97 |
| TOTAL | | | 100 | 100 | 100 |

Les catalyseurs utilisés sont les suivants :
- pour l'exemple 1 (comparatif) :: le Thorcat 535 à base de sel de mercure commercialisé par la Société THOR
- pour l'exemple 2 (selon l'invention) :: le Toyocat F10 à base de dérivés d'imidazole commercialisé par la Société TOSOH
- pour l'exemple 3 (selon l'invention) :: le Toyocat DM70 à base de dérivés d'imidazole commercialisé par la Société TOSOH.

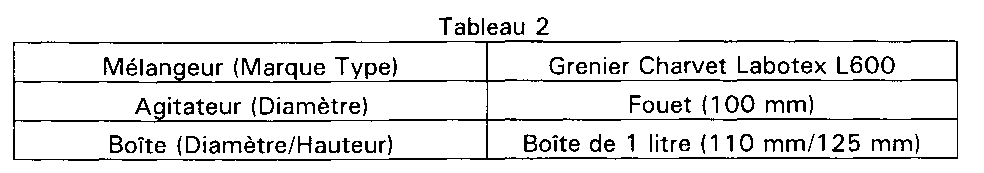

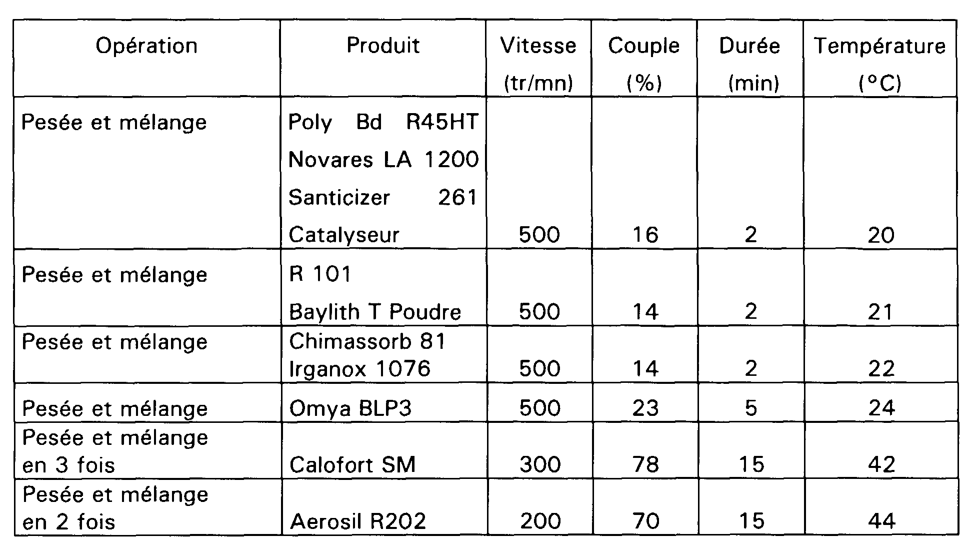

### I.2. Préparation de B

La partie B est préparée dans une boîte en fer blanc de volume 0.7 litre (Hauteur : 90 mm, Diamètre : 100 mm).

Le mélangeur disperseur est un Grenier-Charvet Labotex L600 muni d'un fouet à 3 pales (Diamètre : 100 mm).

La partie B contient principalement le polyisocyanate, du noir de carbone, le silane fonctionnel et du plastifiant. C'est un liquide très fluide de couleur noire.

Pour tous les exemples réalisés une seule et unique partie B a été préparée. Sa composition et ses conditions de préparation sont indiquées dans le tableau 3.

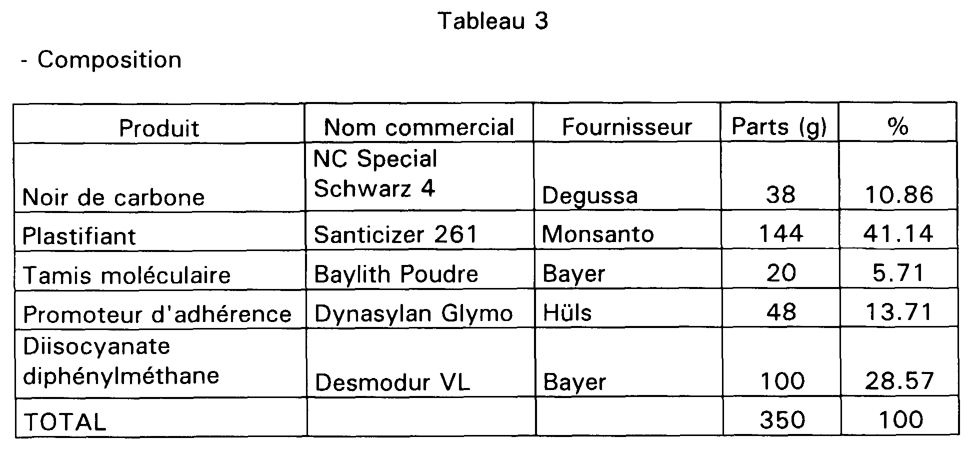

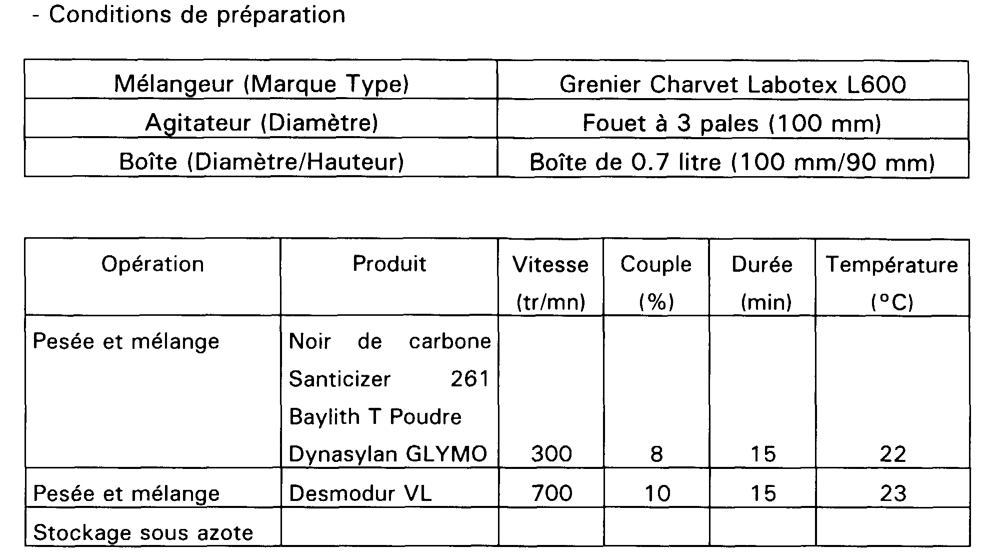

### II - Préparation d'un mastic en vue de son évaluation

Le mastic est préparé en mélangeant la partie A et la partie B selon le rapport de mélange en masse M_{A}/M_{B} de 100/8. Il est préparé et évalué à la température du laboratoire : environ 23°C.

La quantité de mastic nécessaire à chaque évaluation varie :
300 g environ pour le temps de travail
100 g environ pour la montée en viscosité Trombomat
100 g environ pour la montée en dureté.

Pour une masse totale d'environ 100 g, le mastic est préparé manuellement.

Pour une masse totale d'environ 300 g, le mastic est préparé à l'aide d'un mélangeur Grenier-Charvet Labotex L600 muni d'un fouet à 3 pales (Diamètre : 70 mm).

### III - Evaluation d'un mastic

Pour toutes les évaluations, l'instant initial tₒ est l'instant à partir duquel la partie A et la partie B commencent à être mélangées.

### III.1 Le temps de travail

Dans un bécher en polyéthylène (PE) de 600 ml, peser 300 g de partie A et 24 g de partie B. Mélanger avec le mélangeur Grenier-Charvet Labotex L600 muni d'un fouet à 3 pales (Diamètre : 70 mm). Remplir une cartouche à mastic en PE avec le mastic juste préparé. Installer la cartouche sur le pistolet. Régler la pression d'air à 3.4 bar. A tₒ + 25 min, tₒ + 30 min et tₒ + 35 min par exemple, peser la quantité de mastic délivrée par le pistolet sous 3.4 bar pendant 10 s. Multiplier cette quantité par 6 pour obtenir le débit en g/min. Le temps au bout duquel le débit est de 15 g/min est le temps de travail.

Le taux de catalyseur utilisé dans chaque formulation correspond à un temps de travail de 35 minutes.

Les catalyseurs sont donc comparés à iso-temps de travail.

### III.2 La montée en viscosité Trombomat

Dans un bécher en PE de 100 ml, peser 100 g de partie A et 8 g de partie B. Mélanger avec une spatule. Installer aussitôt le bécher contenant le mastic dans la cellule du Trombomat. Thermostater à 23°C si la température de la pièce est différente. Plonger la tige sans bille et la sonde de température dans le mastic sur une hauteur d'environ 1 cm. Mettre en mouvement la tige (mouvement de translation d'avant en arrière) et lancer l'acquisition des mesures de viscosité sur une durée de 8 h. Tracer la courbe de montée en viscosité Trombomat en fonction du temps.

### IV Résultats

IV.1 Dans le tableau suivant les trois formulations précédentes sont comparées.

| | Thorcat 535 Exemple 1 | Toyocat F10 Exemple 2 | Toyocat DM70 Exemple 3 |
|---|---|---|---|
| Temps de gel (min) | 51 | 46 | 39 |
| Temps de prise (min) | 73 | 79 | 71 |
| TP - TG (min) | 22 | 33 | 32 |
| Pente à 2000 Pa.s | 78 | 53 | 55 |

IV.2 Dans le tableau suivant on compare la stabilité au stockage de trois catalyseurs

| Formulation mastic | Catalyseur | Temps de travail (min) | Temps de gel (min) | Temps de prise (min) | Pente à 2000 Pa.s |
|---|---|---|---|---|---|
| Exemple 1 | Thorcat 535 | 37 | 51 | 73 | 78.7 |
| (Catalyseur stocké 3 mois) | Thorcat 535 | 51 | 53 | 84 | 56.3 |
| FOR 128 (Partie A stockée 1 mois) | Thorcat 535 | 95 | 119 | 195 | 23.1 |
| Exemple 2 | Toyocat F10 | 35 | 46 | 79 | 53.2 |
| (Catalyseur stocké 3 mois) | Toyocat F10 | 31 | 44 | 78 | 52.1 |
| (Partie A stockée 1 mois) | Toyocat F10 | 34 | 28 | 52 | 73.0 |

IV.3 Dans le tableau suivant, on compare les valeurs d'adhésion entre verre et aluminium de différentes formulations. Le test est effectué sur une éprouvette constituée d'une lame de verre de 20 mm de largeur recouverte de mastic sur une épaisseur de 2 mm puis d'une lame d'aluminium. La contrainte à la rupture en pelage à 90° doit être au moins égale à 7 N/mm.

| Formulation | Exemple 1 (comparatif) | Exemple 2 (selon l'invention) |
|---|---|---|
| Catalyseur | Thorcat 535 | Toyocat F10 |
| Pelage (N/mm) | 11 | 13 |

## Revendications

1. Composition pour former un polyuréthane constituée de :
- une partie A contenant :
5 à 99,99 % en poids et de préférence de 10 à 50 % d'au moins un polyol,
0 à 50 % en poids et de préférence de 10 à 50 % d'au moins un plastifiant,
0 à 90 % en poids et de préférence de 40 à 90 % d'au moins une charge minérale,
0 à 20 % en poids et de préférence 0 à 10 % d'au moins un agent deshydratant type tamis moléculaire,
0 à 5 % en poids et de préférence de 0 à 1 % d'au moins une résine tackifiante, et
0 à 5 % en poids et de préférence de 0 à 1 % d'au moins un stabilisant UV et/ou un antioxydant, et de
- une partie B contenant :
- 5 à 100 % en poids, et de préférence 20 à 40 % d'au moins un polyisocyanate,
- 0 à 80 % en poids, et de préférence 20 à 60 % d'au moins un plastifiant,
- 0 à 80 % en poids, et de préférence 5 à 40 % d'au moins une charge minérale jouant le rôle de pigment,
- O à 20 % en poids, et de préférence 0 à 10 % d'au moins un agent déshydratant type tamis moléculaire,
- 0 à 50 % en poids, et de préférence 10 à 30 % d'au moins un promoteur d'adhésion,
caractérisée en ce que la partie A contient en outre 0,01 à 1 % en poids d'au moins un dérivé de l'imidazole N-substitué utilisé comme catalyseur.

2. Composition selon la revendication 1 caractérisée en ce que la teneur en catalyseur est comprise entre 0,01 et 0,1 % en poids de la partie A.

3. Composition selon l'une des revendications 1 ou 2 caractérisée en ce que le catalyseur est choisi parmi les imidazoles répondant à la formule générale suivante : 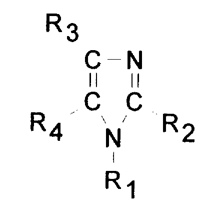 dans laquelle,
R₁ est un groupe alkyle en C₁ - C₄ tel que méthyle, éthyle
R₂, R₃ et R₄ identiques ou non, sont choisis dans le groupe constitué par :
l'hydrogène,
les radicaux alkyles aliphatiques linéaires ou ramifiés ou cycliques en C₁ - C₆.

4. Composition selon l'une des revendications précédentes caractérisée en ce que le polyol est choisi parmi les polymères ayant une masse moyenne en nombre comprise entre 500 et15000 et de préférence 1000 et 5000 et une fonctionnalité moyen allant de 1 à 5 et de préférence de 1,8 à 3.

5. Composition selon la revendication 4 caractérisée en ce que le polyol est un polydiène hydroxylé choisi parmi le polybutadiène, le polyisoprène, le polychloroprène, le poly(1,3-pentadiène) et le poly-cyclopentadiène.

6. Composition selon la revendication 5 caractérisée en ce que le polyol est le polybutadiène hydroxylé.

7. Méthode d'assemblage de substrats par collage consistant en l'application de la composition selon l'une quelconque des revendications précédentes sur au moins une des surfaces à coller et le rapprochement des substrats à joindre de façon à maintenir la composition entre eux.

8. Mastic de joints de double vitrage isolant contenant la composition polyuréthane selon l'une quelconque des revendications 1 à 6.

9. Application de la méthode de la revendication 7 dans les adhésifs, les membranes d'étanchéité, les résines d'encapsulation.
